# EUROPEAN PATENT SPECIFICATION

(11) **EP 2 033 138 B1**
(45) Date of publication and mention of the grant of the patent: **17.11.2010**
(21) Application number: 07788747.9
(22) Date of filing: 15.06.2007
(51) Int. Cl.: G06K 7/08, G06K 7/00

(54) **RFID READING DEVICE**
RFID-LESEEINRICHTUNG
DISPOSITIF DE LECTURE RFID

(30) Priority: 21.06.2006 FI 20060610
(43) Date of publication of application: 11.03.2009
(73) Proprietor: Valtion Teknillinen Tutkimuskeskus, 02150 Espoo (FI)
(72) Inventor: SEPPÄ, Heikki, FI-00370 Helsinki (FI)
(74) Representative: Lipsanen, Jari Seppo Einari
(86) International application number: PCT/FI2007/050362
(87) International publication number: WO 2007/147940

(56) References cited:
- WO-A1-2005/038696
- US-A1- 2004 113 790
- US-A1- 2005 017 073
- US-B1- 6 307 517
- US-B1- 6 452 504

## Description

The present invention relates to an RFID reading device according to Claim 1.

The invention also relates to a method in connection with an RFID reading device.

The use of RFID is rapidly becoming common, mainly due to logistics applications. Particularly UHF-range RFID has been increasing very rapidly. There are several reading devices already on the market, but they are relatively expensive and handheld readers are still not generally available. RFID reading devices made in the traditional manner are relatively complex, are unable to overcome problems caused by strong reflection, and have a high power consumption. A traditional high-frequency RFID reading device is based on feeding power from a 50-Ohm power amplifier through a rotary element to a 50-Ohm antenna and through it to the environment. The reflected power is directed through the rotary element to a preamplifier.

US 2004/0113790 describes a transponder reading device comprising the pre-characterising features of claim 1.

The present invention is intended to eliminate the defects of the state of the art and to create a new type of system, method, and antenna.

The invention is based on the transmitter part comprising a transformer, typically a current transformer, in which there are at least three coils, which are connected to the same magnetic field, from the first of which coils the antenna, or antenna group is fed, the second being fed with a reference load to compensate the effect of the transmitted power in the first coil, the third coil of the transformer being connected to the main amplifier of the receiver.

More specifically, the RFID reading device according to the invention is characterized by what is stated in the characterizing portion of Claim 1.

The method according to the invention is, for its part, characterized by what is stated in the characterizing portion of Claim 8.

Considerable advantages are gained with the aid of the invention.

Adjustable narrowband antenna:
In certain embodiments of the invention, the solution attenuates the distortion arising from transmission and eliminates the need for separate transmission filtering. GSM or another RFID transponder will not interfere with the preamplifier as much as in connection with a broadband antenna. If the antenna were to be made to cover the entire RFID-UHF band in different continents, the antenna would also receive the various GSM frequencies in all continents. A narrowband antenna permits the preamplifier to be connected directly through the transformer to the antenna. An adjustable LC filter placed after the preamplifier will improve the solution.

Power saving:
Because the power is connected through a reactive impedance to the antenna, the efficiency of the output stage is in principle very high. Due to the transformer, the power required for compensation is very much less than the power going to the antenna, in certain embodiments of the invention.

Certain embodiments of the invention compensate for reflection in a simple manner. As the antenna is adjustable and narrowband, it is enough to compensate only the connection of the real component (that transporting the main power) to the preamplifier. In this way, all the information for compensation is obtained from the output of the demodulator, which is in any case required for reading the code.

By means of certain embodiments of the invention a good signal-noise ratio is obtained. If the power going to the preamplifier is compensated, for example, by synthesizing a return signal, the solution will often increase noise. This is because the power fed to the antenna and the signal made for compensation are not fully correlated. As, in the case according to the invention, the signal is taken for compensation from the output of the output stage, which also feeds the signal to the antenna, using this solution does not increase noise in the preamplifier.

Certain embodiments of the invention are suitable for all power levels, for a fixed base station, or for a portable reading device. Different UHF frequencies can be used, but the same solution can, of course, also be applied on other frequencies.

By means of the solution according to the invention, an RFID reader can be advantageously integrated in, for example, a mobile station. The reading device according to the invention can be utilized in fixed base stations, in hand readers operating at a fixed or variable power level, or by combining the method in a GSM telephone. The advantages of the method are particularly emphasized if the present method is combined as part of a GSM telephone, because the additional cost incurred by RFID is negligible.

The power consumption of the apparatus, such as a mobile telephone is reduced and the operating times of battery-operated devices is significantly increased. The efficiency of the antenna can also be improved and power consumption reduced in this way too. To avoid problems, a narrowband antenna should generally be made tunable. As the antenna is narrowband, in the best case, expensive bandpass filters can be eliminated, which will reduce the manufacturing costs of mobile stations in particular. In the best case, the solution according to the invention will allow the whole radio-frequency part of a mobile telephone to be integrated in the immediate vicinity of the antenna, and possibly inside it. The invention can also be used in the noise optimization of the receiver side.

In the following, the invention is examined with the aid of examples of applications according to the accompanying drawings.
Figure 1 shows one RFID reading device according to the invention.
Figure 2 shows a second RFID reading device according to the invention.

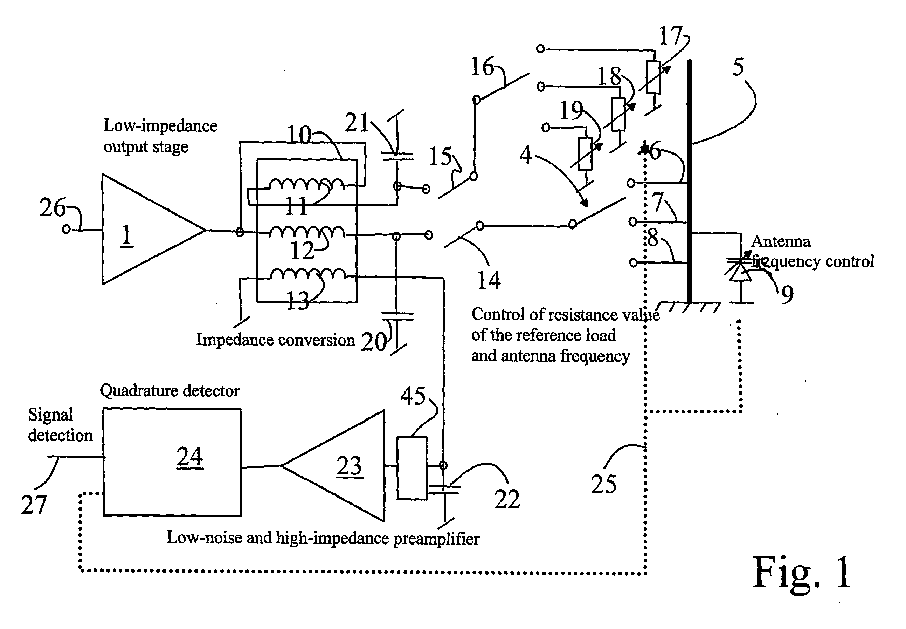

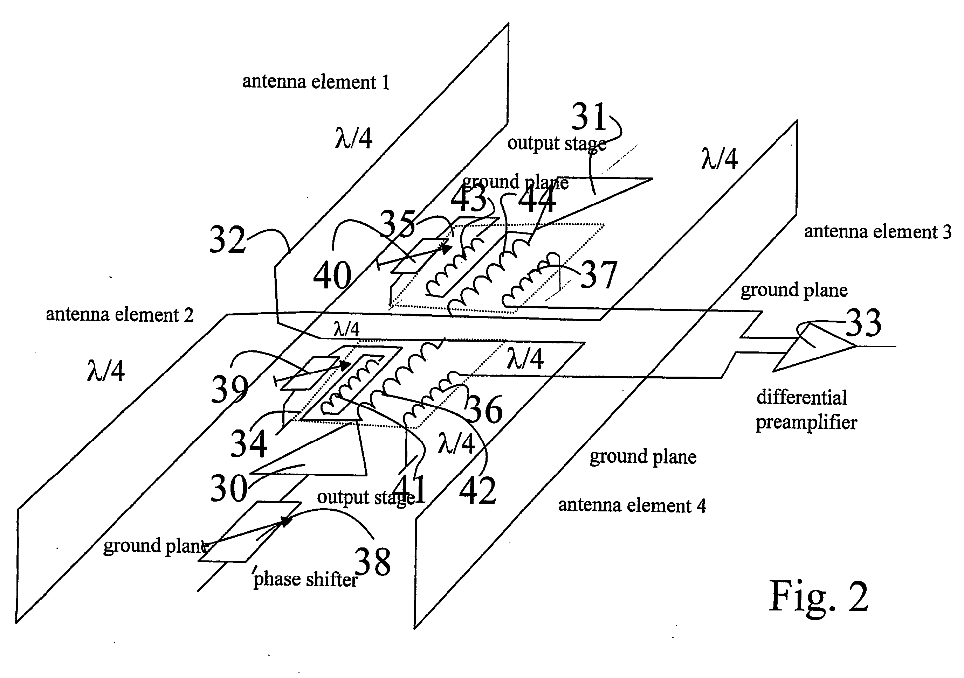

The following terminology is used in connection with the reference numbers in the description of the preferred examples of applications relating to Figures 1 and 2.
- 1: output stage
- 4: antenna switch
- 5: antenna
- 9: varactor
- 10: transformer
- 11: second coil of transformer
- 12: first coil of transformer
- 13: third coil of transformer (detector coil)
- 14: power regulation switch
- 15: impedance switch
- 16: impedance selector switch
- 17: adjustable impedance
- 18: adjustable impedance
- 19: adjustable impedance
- 20: capacitor
- 21: capacitor
- 22: capacitor
- 23: preamplifier
- 24: quadrature detector
- 25: control line
- 26: input
- 27: signal detection
- 30: output stage
- 31: output stage
- 32: antenna element
- 33: differential amplifier
- 34: current transformer
- 35: current transformer
- 36: third coil
- 37: third coil
- 38: phase distributor
- 39: reference load
- 40: reference load
- 41: second coil
- 42: first coil
- 43: second coil
- 44: first coil
- 45: adjustable filter

The present invention discloses a method, in one preferred embodiment of which a very low-impedance amplifier, which is connected directly to the antenna 5, is used as the output stage 1. The impedance level of the antenna is selected so that the outgoing power at the radio frequency will be suitable. If a long reading distance is desired, it is possible, for example in Europe, to use the greatest permitted 2-W directional transmission power at the 865-MHz frequency. In addition, the antenna is tuned, for example using a varactor, in such a way that the impedance of the antenna is always real, in order to optimize efficiency. The use of this arrangement can significantly improve the efficiency of the output stage. The transmission power can be adjusted with the aid of a switch 4, by connecting the antenna 5 from the various connection points 6, 7, and 8.

The arrangement described above does not, as such, permit the use of the reflection technique to detect the modulation created by the RFID. Because the antenna 5 is rigidly connected to the output stage 1, the potential over it does not depend on the reflection.

The arrangement according to Figure 1 can be used to detect the modulation created by an RFID. The transformer 10 of the figure comprises at least three coils 11, 12, and 13. The current going to the antenna 5 runs through the first coil 12. The current to the reference load 17, 18, and 19 runs through the second coil 11, in such a way that it compensates as precisely as possible the magnetic field induced by the current going to the antenna 5. The second coil 11 is typically connected in such a way that its current induces a magnetic field in the opposite direction to, and of the same magnitude as the magnetic field induced by the first coil 12. In practice, this is implemented by either the parallel placing of the first coil 12 and the second coil 11, so that the connections or windings of the coils 11and 12, relative to each other, are in opposite directions, in order to realize the condition described above. The third coil 13 is connected to the preamplifier 23 either directly, or through the preamplifier, the filter 45 or other necessary components. Thus in this case, the term connecting is used to refer to the fact that the signal of the third coil 13 connects to the preamplifier 23 either directly or indirectly, according to Figure 1. Thus with the aid of the coil 12, the current or voltage coming from the output stage 1 is measured depending on the impedance of the preamplifier 23, so that the effective impedance of the antenna 5 can be measured. The figure shows the current-measurement alternative. Due to how it operates, in a typical embodiment of the invention the transformer 10 can be referred to as a current transformer. Because in the method the varactor 9 is used to keep the antenna 5 real the whole time despite reflections, a real voltage regulated impedance 17, 18, and 19 can be connected simply to the same transformer 10 from the output stage 1, and thus compensate the voltage created in the preamplifier 23 by the current of the output stage 1. If the reference resistance 17, 18, and 19 is adjustable, the effect of the reflection of the current going to the antenna 5 can also be compensated. If the reference resistance is fixed, or if the time constants of the regulators are selected to be slow (e.g., less than 10 kHz), only the modulation created by the RFID circuits will create a signal in the preamplifier 23. The arrangement is intended to prevent the saturation of the preamplifier 23. An adjustable real impedance 17, 18, 19 can be implemented, for example, using PIN diodes or a FET. By exploiting the conversion ratios of the transformer 10 the impedance of the reference load 17, 18, or 19 can be kept high, so that it will not significantly increase the system's power consumption. The pre stage 23 can be connected to the system in principle in two ways. If the third coil (detector coil) 13 is strongly connected to the two other coils 11 and 12, it will be preferable to make the preamplifier 13 high impedance. In that case, the voltage induced in the third coil 13 will be proportional to the derivative of the magnetic field created by the difference of the currents going to the antenna 5 and the reference resistance 17, 18, and 19. A second alternative is to exploit feedback to make the input impedance of the preamplifier 23 very small, in which case the voltage in the output of the amplifier 23 will be directly proportional to the magnetic field. As such, there is no great difference between the methods, but what is important is that the invention is most advantageous when the preamplifier 23 has either a high or a low impedance. Thus the invention will be surprising to one skilled in the art, who would typically select an input impedance of 50 Ohm for the preamplifier, which is not in the optimum range according to the invention. By optimizing the number of windings in the transformer 10, it is also possible to affect the impedance seen by the preamplifier 23 and through it to take care of noise adjustment. In the example in question, the noise adjustment will change, if the power being fed to the antenna 5 is altered. If it is wished to optimize the noise adjustment in all situations, the number of windings in the induction coil should be altered, or an impedance converter should be placed between the detector coil 13 and the preamplifier 23. If it is intended to keep the preamplifier 23 either high-impedance, or alternatively low-impedance, it is best to integrate the preamplifier 23 very close to the transformer 10. A highly advantageous solution is to use a capacitance to tune the inductance of the detector coil 13 and to connect a FET-type high-impedance preamplifier directly close to the detector coil 13. After the FET acting as a preamplifier, it is possible to place, for example, an adjustable filter 45 (if the same electronics are also used in a GSM telephone), such as an LC filter, and after it a second amplifier stage 23. If the FET amplifier is further feedback-connected in such a way that its impedance increases, a good linear preamplifier will be created. This is preferable, because particularly a portable RFID reader requires great dynamics, not only on account of reflection, but also on account on the signal caused by other readers.

After the preamplifier 23, the signal is detected, using for example using a quadrature detector 24, in which both the real 25 and the imaginary 27 parts of the signal will be detected. In a preferred embodiment of the invention, the real output of the detector 24 is used as feedback to control both the artificial loads 17 - 19 and also the varactor 9, in order to implement the frequency control of the antenna.

If the impedance of the preamplifier 23 is high, the voltage over the coil 13 is measured, and the imaginary part of the detector 24 is used to control the artificial load. Depending always on the impedance of the preamplifier 23, intermediate forms between these cases are also possible.

If the method is used with a constant power, the system can be simplified still further by removing the switches 14 and 4 and feeding the signal directly to the antenna 5, so that the power will always be of the magnitude of the maximum power.

It should be noted, that in the solution of Figure 1, the first switches 15 and 16 after the transformer 10 can be unnecessary when operating at a single power level, if the device is used purely as an RFID reader. They will be required, if the same electronics are used as both a UHF-RFID reader and a GSM telephone. A second alternative is that, in the electronics in question, Bluetooth (or WLAN) and a microwave RFID reader are combined. The second switches 14 and 4 are necessary, only if it is wished to regulate the power level.

It is often also wished to combine, for example, a GSM telephone with a portable RFID reader. In this solution, a UHF-RFID reader can be created in a GSM telephone by simply adding to it a transformer 10 integrated on a circuit board and PIN diodes 17 - 19. The additional cost relating to the components will remain less than € 1,-.

The first coil 12 of the current transformer 10 shown can also be part of the antenna itself, in which case power savings can be achieved.

Figure 2 shows a solution suitable for a fixed reading device, in which two output stages 30 and 31 are used to feed an antenna element 32. As in Figure 1, the third coils 36 and 37 of transformers 34 and 35 are connected to the input of a differential amplifier 33. A phase distributor 38 is arranged in the input of the second output stage 30, in order to control the direction of the antenna. Due to the two output stages 30 and 31, the possibility is achieved of feeding double power to the antenna 32. A branch of the transformers 34 and 35 and the second coil 41, 43 is connected to a reference load 39 and 40, as in Figure 1. The second coils 41, 43 of the transformer 34 are connected in such a way that the current travelling in the coil 41 compensates the magnetic field caused by the current travelling through the coil 42, so that the coil 36 connected to the preamplifier 33 sees only the return signal from the RFID tag. Correspondingly, the current travelling in the coil 43 compensates the magnetic field caused by the current travelling through the coil 44.

The antenna 5 or 32, or the antenna group can be connected to the output stage and the circuits relating to it, either directly galvanically, or alternatively through a suitable transfer path, in which case galvanic contact will not be essential.

The first coil 12 of the transformer 10, through which the current of the output stage 1 goes to the antenna 5, can also be replaced with part of the antenna, or it can form part of the antenna. In that case, the magnetic field caused by the current travelling in the antenna will be picked up and compensated by the coil 11 when it connects to the third coil 13 going to the preamplifier 23.

The adjustment and compensation of the frequency of the antenna is typically made continuously in frequency level in these frequencies until modulation starts. In practice, 1 kHz - 10 kHz is the maximum width of the compensation band. In this embodiment of the invention, the important fact is that compensation is extremely rapid and reflection cannot arise more rapidly.

The problem with UHF frequencies is that the frequencies range from 865 MHz to 950 MHz in different parts of the world. It is difficult to make a small antenna that will cover all these frequencies well, and also with a good efficiency. In this solution according to the invention, the antenna is typically narrowband and adjustable in nature, which permits a solution with good properties that operates over a wide frequency range. In addition, places for capacitors can be attached to the antenna. By connecting a capacitor to a suitable place, it is possible to preselect the product, for example, for Asian markets, without a new antenna.

Besides a PIN diode or an FET, in principle any resistance at all that can be controlled by voltage will be suitable for the compensation of the real part of the antenna. The transformer makes it possible to direct only a small part of the power to the adjustable resistance, which is a great advantage, because it is very difficult to make an adjustable resistance with a large dynamic, if watts of power are run to it. Such a power component is expensive and cannot be integrated inside an IC.

With the aid of one embodiment of the invention, an adjustable resistance can be easily implemented even for low power, as long as a sufficiently large number of windings are formed in the coil of the reference resistance. However, with large numbers of windings it may be necessary to tune the coil with the aid of a capacitor, for example.

In place of a varactor, it is possible to use any adjustable reactance whatever: a varactor, a paraelectric control capacitor, switch elements and fixed capacitors, etc.

With the aid of the invention, it is possible to obtain, from the outputs 27 and 25 of the detector 24, information on the object being measured (an RFID tag) concerning not only its identity and information content, but also concerning the distance of the object and its movement, such as its approaching or retreating from the reading device.

## Claims

1. RFID reading device, which comprises
- a transmitter part (1, 30, 31),
- a receiving part (23, 33, 45), and
- an antenna (5, 32) or antenna group connected to them by means of a transformer coil,
**characterized in that**
- the transmitter part (1, 30, 30) comprises a transformer (10, 34, 35), in which there are at least three coils (11, 12, 13) connecting to the same magnetic field, a first coil (12), a second coil (11), and a third coil (13), of which
- the antenna or antenna group (5, 32) is arranged to be fed through the first coil (12) by a low impedance output stage (1),
- a reference load (17, 18, 19) is arranged to be fed through the second coil (11) by said low impedance output stage (1) such that the current through the second coil (11) compensates the magnetic field induced by the current going to the antenna through the first coil (12),
and
- the input of a preamplifier (23, 33) of the receiving part is connected to the third coil (13, 36, 37).

2. RFID reading device according to Claim 1, **characterized in that** the transformer (10) forms part of the antenna (5, 32).

3. RFID reading device according to Claim 1 or 2, **characterized in that** the antenna (5) is arranged to connect to the transmitter (1, 30, 31) or receiver part (23, 33) from different connection points (6, 7, 8).

4. RFID reading device according to Claim 1, 2, or 3, **characterized in that** the reference load (17, 18, 19) can be adjusted electrically.

5. RFID reading device according to Claim 1, 2, 3 or 4, **characterized in that** an electrically adjustable capacitor (9) is connected in parallel with the antenna (5), in order to tune the antenna (5) to different frequencies.

6. RFID reading device according to any of the above Claims, **characterized in that** the system comprises an electrically controlled switch (4) arranged in connection with the antenna (5), by means of which the connection point of the antenna can be adjusted.

7. RFID reading device according to any of the above Claims, **characterized in that** the number of windings of the second coil (11) connected to the reference resistance (17, 18, 19) is selected to be large, so that the power going to the reference resistance (17, 18, 19) can be kept small.

8. Method in an RFID reading device, in which method
- transmitter part (1, 30, 31) is used to transmit electromagnetic radiation,
- a receiving part (23, 33, 45) is used to receive a signal received from RF tags with the aid of an antenna, or antenna group (5, 32),
- a transformer is used for feeding the antenna through one of the transformer coils,
**characterized in that**
- in the transmitter part (1, 30, 30), the antenna, or antenna group (5, 32) is fed through a transformer (10, 34, 35), in which there are at least three coils (11, 12, 13) connecting to the same magnetic field, a first coil (12), a second coil (11), and a third coil (13), of which
- the antenna, or antenna group (5, 32) are fed through the first coil (12) by a low impedance output stage (1),
- a reference load (17, 18, 19) is fed through the second coil (11) by said low impedance output stage (1) such that the current through the second coil (11) compensates the magnetic field induced by the current going to the antenna through the first coil (12), and
- the input of a preamplifier (23, 33) of the receiving part is connected to the third coil (13, 36, 37).

9. Method according to Claim 8, **characterized in that** the transformer (10) is used to form part of the antenna (5, 32).

10. Method according to Claim 8 or 9, **characterized in that** the antenna (5) is connected to the transmitter (1, 30, 31) or receiver part (23, 33) from different connection points (6, 7, 8).

11. Method according to Claim 8, 9, or 10, **characterized in that** the reference load (17, 18, 19) is adjusted electrically.

12. Method according to Claim 8, 9, 10 or 11, **characterized in that** an electrically adjustable capacitor (9) is connected in parallel with the antenna (5), in order to tune the antenna (5) to different frequencies.

13. Method according to any of the above Claims, **characterized in that** the RFID reading device comprises an electrically controlled switch (4) arranged in connection with the antenna (5), by means of which the connection point of the antenna is adjusted.

14. Method according to any of the above Claims, **characterized in that** the number of windings of the second coil (11) connected to the reference resistance (17, 18, 19) is selected to be large, so that the power going to the reference resistance (17, 18, 19) is kept small.

## Patentansprüche

1. RFID-Lesegerät mit:
einem Sendeteil (1, 30, 31);
einem Empfangsteil (23, 33, 45); und
einer über eine Transformatorspule damit verbundenen Antenne (5, 32) oder Antennengruppe;
**dadurch gekennzeichnet dass**
der Sendeteil (1, 30, 31) einen Transformator (10, 34, 35) aufweist, der mindestens drei Spulen (11, 12, 13) aufweist - eine erste Spule (12), eine zweite Spule (11) und eine dritte Spule (13), die mit dem gleichen Magnetfeld koppeln; wobei
die Antenne oder Antennengruppe (5, 32) dazu geeignet ist, durch eine Ausgangsstufe (1) mit niedriger Impedanz über die erste Spule (12) versorgt zu werden;
ein Referenzwiderstand (17, 18, 19) dazu geeignet ist, durch die Ausgangsstufe (1) mit niedriger Impedanz über die zweite Spule (11) derart versorgt zu werden, dass der Strom durch die zweite Spule (11) das Magnetfeld kompensiert, das durch den Strom induziert wird, der der Antenne über die erste Spule (12) zugeführt wird; und
der Eingang eines Vorverstärkers (23, 33) des Empfangsteils mit der dritten Spule (13, 36, 37) verbunden ist.

2. RFID-Lesegerät nach Anspruch 1, **dadurch gekennzeichnet, dass** der Transformator (10) einen Teil der Antenne (5, 32) bildet.

3. RFID-Lesegerät nach Anspruch 1 oder 2, **dadurch gekennzeichnet, dass** die Antenne (5) dazu geeignet ist, von verschiedenen Verbindungspunkten (6, 7, 8) mit dem Sendeteil (1, 30, 31) oder mit dem Empfangsteil (23, 33, 45) verbunden zu werden.

4. RFID-Lesegerät nach Anspruch 1, 2 oder 3, **dadurch gekennzeichnet, dass** der Referenzwiderstand (17, 18, 19) elektrisch einstellbar ist.

5. RFID-Lesegerät nach Anspruch 1, 2, 3 oder 4, **dadurch gekennzeichnet, dass** ein elektrisch einstellbarer Kondensator (9) zur Antenne (5) parallel geschaltet ist, um die Antenne (5) auf verschiedene Frequenzen abzustimmen.

6. RFID-Lesegerät nach einem der vorangehenden Ansprüche, **dadurch gekennzeichnet, dass** das RFID-Lesegerät einen der Antenne (5) zugeordneten, elektrisch gesteuerten Schalter (4) aufweist, durch den der Verbindungspunkt der Antenne einstellbar ist.

7. RFID-Lesegerät nach einem der vorangehenden Ansprüche, **dadurch gekennzeichnet, dass** die Wicklungszahl der mit dem Referenzwiderstand (17, 18, 19) verbundenen zweiten Spule (11) so groß gewählt wird, dass die dem Referenzwiderstand (17, 18, 19) zugeführte Leistung klein gehalten werden kann.

8. Verfahren in einem RFID-Lesegerät, wobei in dem Verfahren
ein Sendeteil (1, 30, 31) zum Aussenden elektromagnetischer Strahlung;
ein Empfangsteil (23, 33, 45) zum Empfangen eines Signals, das über eine Antenne oder Antennengruppe (5, 32) von RF-Etiketten empfangen wird; und
ein Transformator zum Versorgen der Antenne über eine der Transformatorspulen verwendet wird;
**dadurch gekennzeichnet, dass**
im Sendeteil (1, 30, 31) die Antenne oder Antennengruppe (5, 32) über einen Transformator (10, 34, 35) versorgt wird, der mindestens drei Spulen (11, 12, 13) aufweist - eine erste Spule (12), eine zweite Spule (11) und eine dritte Spule (13), die mit dem gleichen Magnetfeld koppeln; wobei
die Antenne oder Antennengruppe (5, 32) durch eine Ausgangsstufe (1) mit niedriger Impedanz über die erste Spule (12) versorgt wird;
ein Referenzwiderstand (17, 18, 19) durch die Ausgangsstufe (1) mit niedriger Impedanz über die zweite Spule (11) derart versorgt wird, dass der Strom durch die zweite Spule (11) das Magnetfeld kompensiert, das durch den Strom induziert wird, der der Antenne über die erste Spule (12) zugeführt wird; und
der Eingang eines Vorverstärkers (23, 33) des Empfangsteils mit der dritten Spule (13, 36, 37) verbunden ist.

9. Verfahren nach Anspruch 8, **dadurch gekennzeichnet, dass** der Transformator (10) verwendet wird, um einen Teil der Antenne (5, 32) zu bilden.

10. Verfahren nach Anspruch 8 oder 9, **dadurch gekennzeichnet, dass** die Antenne (5) von verschiedenen Verbindungspunkten (6, 7, 8) mit dem Sendeteil (1, 30, 31) oder mit dem Empfangsteil (23, 33, 45) verbunden wird.

11. Verfahren nach Anspruch 8, 9 oder 10, **dadurch gekennzeichnet, dass** der Referenzwiderstand (17, 18, 19) elektrisch eingestellt wird.

12. Verfahren nach Anspruch 8, 9, 10 oder 11, **dadurch gekennzeichnet, dass** ein elektrisch einstellbarer Kondensator (9) zur Antenne (5) parallel geschaltet ist, um die Antenne (5) auf verschiedene Frequenzen abzustimmen.

13. Verfahren nach einem der vorangehenden Ansprüche, **dadurch gekennzeichnet, dass** das RFID-Lesegerät einen der Antenne (5) zugeordneten, elektrisch gesteuerten Schalter (4) aufweist, durch den der Verbindungspunkt der Antenne eingestellt wird.

14. Verfahren nach einem der vorangehenden Ansprüche, **dadurch gekennzeichnet, dass** die Wicklungszahl der mit dem Referenzwiderstand (17, 18, 19) verbundenen zweiten Spule (11) so groß gewählt wird, dass die dem Referenzwiderstand (17, 18, 19) zugeführte Leistung klein gehalten wird.

## Revendications

1. Dispositif de lecture RFID, comprenant :
- une partie émettrice (1, 30, 31),
- une partie réceptrice (23, 33, 45), et
- une antenne (5, 32) ou groupe d'antennes connecté à celles-ci au moyen d'une bobine de transformateur,
**caractérisé en ce que**
- la partie émettrice (1, 30, 31) comprend un transformateur (10, 34, 35), dans lequel se trouvent au moins trois bobines (11, 12, 13) se connectant au même champ magnétique, une première bobine (12), une deuxième bobine (11) et une troisième bobine (13), parmi lesquelles
- l'antenne ou groupe d'antennes (5, 32) est agencé pour être alimenté par le biais de la première bobine (12) par un étage de sortie à basse impédance (1),
- une charge de référence (17, 18, 19) est agencée pour être alimentée par le biais de la deuxième bobine (11) par ledit étage de sortie à basse impédance (1) de manière que le courant à travers la deuxième bobine (11) compense le champ magnétique induit par le courant passant à l'antenne à travers la première bobine (12), et
- l'entrée d'un préamplificateur (23, 33) de la partie réceptrice est connectée à la troisième bobine (13, 36, 37).

2. Dispositif de lecture RFID selon la revendication 1, **caractérisé en ce que** le transformateur (10) forme une partie de l'antenne (5, 32).

3. Dispositif de lecture RFID selon la revendication 1 ou 2, **caractérisé en ce que** l'antenne (5) est agencée pour se connecter à la partie émettrice (1, 30, 31) ou réceptrice (23, 33) à partir de différents points de connexion (6, 7, 8).

4. Dispositif de lecture RFID selon la revendication 1, 2 ou 3, **caractérisé en ce que** la charge de référence (17, 18, 19) peut être réglée électriquement.

5. Dispositif de lecture RFID selon la revendication 1, 2, 3 ou 4, **caractérisé en ce qu'**un condensateur réglable électriquement (9) est connecté en parallèle avec l'antenne (5), de manière à accorder l'antenne (5) à des fréquences différentes.

6. Dispositif de lecture RFID selon l'une quelconque des revendications précédentes, **caractérisé en ce que** le système comprend un commutateur commandé électriquement (4) agencé en connexion avec l'antenne (5), au moyen duquel le point de connexion de l'antenne peut être ajusté.

7. Dispositif de lecture RFID selon l'une quelconque des revendications précédentes, **caractérisé en ce que** le nombre de spires de la deuxième bobine (11) connectée à la résistance de référence (17, 18, 19) est sélectionné pour être grand, de manière que la puissance allant à la résistance de référence (17, 18, 19) puisse être maintenue faible.

8. Procédé dans un dispositif de lecture RFID, procédé dans lequel :
- une partie émettrice (1, 30, 31) est utilisée pour transmettre un rayonnement électromagnétique,
- une partie réceptrice (23, 33, 45) est utilisée pour recevoir un signal à partir d'étiquettes RF à l'aide d'une antenne ou groupe d'antennes (5, 32),
- un transformateur est utilisé pour alimenter l'antenne par le biais d'une des bobines de transformateur,
**caractérisé en ce que**
- dans la partie émettrice (1, 30, 31), l'antenne ou groupe d'antennes (5, 32) est alimenté par le biais d'un transformateur (10, 34, 35), dans lequel se trouvent au moins trois bobines (11, 12, 13) se connectant au même champ magnétique, une première bobine (12), une deuxième bobine (11) et une troisième bobine (13), parmi lesquelles
- l'antenne ou groupe d'antennes (5, 32) est alimenté par le biais de la première bobine (12) par un étage de sortie à basse impédance (1),
- une charge de référence (17, 18, 19) est alimentée par le biais de la deuxième bobine (11) par ledit étage de sortie à basse impédance (1) de manière que le courant à travers la deuxième bobine (11) compense le champ magnétique induit par le courant passant à l'antenne à travers la première bobine (12), et
- l'entrée d'un préamplificateur (23, 33) de la partie réceptrice est connectée à la troisième bobine (13, 36, 37).

9. Procédé selon la revendication 8, **caractérisé en ce que** le transformateur (10) est utilisé pour former une partie de l'antenne (5, 32).

10. Procédé selon la revendication 8 ou 9, **caractérisé en ce que** l'antenne (5) est connectée à la partie émettrice (1, 30, 31) ou réceptrice (23, 33) à partir de différents points de connexion (6, 7, 8).

11. Procédé selon la revendication 8, 9 ou 10, **caractérisé en ce que** la charge de référence (17, 18, 19) est réglée électriquement.

12. Procédé selon la revendication 8, 9, 10 ou 11, **caractérisé en ce qu'**un condensateur réglable électriquement (9) est connecté en parallèle avec l'antenne (5), de manière à accorder l'antenne (5) à des fréquences différentes.

13. Procédé selon l'une quelconque des revendications précédentes, **caractérisé en ce que** le dispositif de lecture RFID comprend un commutateur commandé électriquement (4) agencé en connexion avec l'antenne (5), au moyen duquel le point de connexion de l'antenne est ajusté.

14. Procédé selon l'une quelconque des revendications précédentes, **caractérisé en ce que** le nombre de spires de la deuxième bobine (11) connectée à la résistance de référence (17, 18, 19) est sélectionné pour être grand, de manière que la puissance allant à la résistance de référence (17, 18, 19) soit maintenue faible.
